(19) Europäisches Patentamt
European Patent Office
Office européen des brevets

(11) **EP 4 424 737 A1**

(12) **EUROPÄISCHE PATENTANMELDUNG**

(43) Veröffentlichungstag:
**04.09.2024 Patentblatt 2024/36**

(21) Anmeldenummer: **23159756.8**

(22) Anmeldetag: **02.03.2023**

(51) Internationale Patentklassifikation (IPC):
*C08G 18/48* (2006.01)   *C08G 18/76* (2006.01)
*C08L 71/03* (2006.01)   *C08L 75/08* (2006.01)
*C08G 18/50* (2006.01)

(52) Gemeinsame Patentklassifikation (CPC):
(C-Sets verfügbar)
**C08G 18/7664; C08G 18/4804; C08G 18/5021;
C08L 71/03; C08L 75/08;** C08G 2110/0083 (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft
9494 Schaan (LI)**

(72) Erfinder:
• **Wehner, Marius
82061 Neuried (DE)**

• **Förg, Christian
86807 Buchloe (DE)**
• **Paetow, Mario
86899 Landsberg am Lech (DE)**
• **Reineck, Marie
86916 Kaufering (DE)**

(74) Vertreter: **Hilti Aktiengesellschaft
Corporate Intellectual Property
Feldkircherstrasse 100
Postfach 333
9494 Schaan (LI)**

(54) **POLYOL-BASIERTE BASISZUSAMMENSETZUNG, SCHAUMZUSAMMENSETZUNG MIT RECYCELTEM KAUTSCHUKPRODUKT UND DARAUS HERGESTELLTER FORMKÖRPER FÜR BRANDSCHUTZZWECKE**

(57) Die vorliegende Erfindung betrifft eine Polyol-basierte Basiszusammensetzung und eine Schaumzusammensetzung zur Herstellung eines geschäumten Formkörpers für Brandschutzzwecke. Ferner betrifft die vorliegende Erfindung einen aus der Schaumzusammensetzung hergestellten Formkörper und ein Verfahren zur Herstellung des Formkörpers. Die erfindungsgemäßen Zusammensetzungen und der daraus hergestellte Formkörper für Brandschutzzwecke umfassen ein recyceltes Kautschukprodukt, wodurch die $CO_2$-Bilanz des Formkörpers verbessert wird und zusätzlich im Brandfall die Aschenkrustenbildung und das Expansionsverhalten verbessert werden können.

**EP 4 424 737 A1**

(52) Gemeinsame Patentklassifikation (CPC): (Forts.)

C-Sets
**C08L 71/03, C08L 17/00;**
**C08L 75/08, C08K 3/016, C08L 17/00;**
**C08L 75/08, C08K 5/0066, C08L 17/00;**
**C08L 75/08, C08L 17/00**

**Beschreibung**

Die vorliegende Erfindung betrifft eine Polyol-basierte Basiszusammensetzung und eine Schaumzusammensetzung zur Herstellung eines geschäumten Formkörpers für Brandschutzzwecke. Ferner betrifft die vorliegende Erfindung einen aus der Schaumzusammensetzung hergestellten Formkörper und ein Verfahren zur Herstellung des Formkörpers. Die erfindungsgemäßen Zusammensetzungen und der daraus hergestellte Formkörper für Brandschutzzwecke umfassen ein recyceltes Kautschukprodukt, wodurch die $CO_2$-Bilanz des Formkörpers verbessert wird und zusätzlich die Aschenkrustenbildung und das Expansionsverhalten im Brandfall verbessert werden können.

**Hintergrund**

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen Brandschutzabschottungsmaterialen, wie beispielsweise Brandschutzkissen, und Brandschutzsteine, eingebracht. Hierbei handelt es sich um sogenannte Formkörper, welche im Rahmen eines definierten Herstellungsprozesses produziert werden. Diese Formkörper basieren in vielen Fällen aus Polyurethanschäumen. Zusätzlich existieren bereits Brandschutzmaterialien auf Polyurethanschaum für Fugenanwendungen.

Bekannt sind auch sogenannte Ortsschäume. Als Ortschaum wird ein Schaum bezeichnet, der direkt an der Verwendungsstelle im Spritz- oder Gießverfahren ein- bzw. aufgebracht wird und anschließend aufschäumt. Unterschieden werden Ein- und Mehrkomponentenschäume. Viele Ortschäume bestehen aus Polyurethan (PU).

Im Laufe der letzten Jahre ist es auch bei der Herstellung von Brandschutzprodukten immer wichtiger geworden, die Kohlenstoffdioxidbilanz ($CO_2$-Bilanz) zum Schutz des Klimas zu verbessern. Mit den Klimazielen der europäischen Union wird bis 2030 eine Reduktion der Treibhausgase um 55% im Vergleich zu 1990 angestrebt, bis 2050 wird Klimaneutralität angestrebt. Zur Herstellung von geschäumten Formkörpern für Brandschutzanwendungen, wie beispielsweise Brandschutzkissen und Brandschutzsteinen, werden der Natur Rohstoffe entnommen und diese nach der Verwendung als Müll entsorgt. Bei der Verarbeitung der Rohstoffe hin zum Endprodukt wird konstant Kohlenstoffdioxid freigesetzt, welches klimaschädlich ist.

Für jedes Produkt kann der sogenannte $CO_2$-Fußabdruck (carbon footprint, CFP) ermittelt werden, der dessen $CO_2$-Bilanz beschreibt. Der CFP eines Produkts wird üblicherweise im Rahmen eines Life-Cycle Assessments nach ISO 14040/14044 bestimmt. Die Verwendung von recyclierten Materialien verbessert den $CO_2$-Fußabdruck eines Produktes in der Regel. Grundsätzlich reduziert der Einsatz von recyclierten Materialien die Verwendung von nativen Rohstoffen.

In Europa entstehen jährlich ca. 3,45 Mio. Tonnen Altreifen, welche häufig im Rahmen der Müllverwertung verbrannt werden. Bei der Verbrennung der Altreifen werden umweltschädliche Treibhausgase freigesetzt.

In Anbetracht der obigen Ausführungen besteht daher Bedarf geschäumte Formkörper für Brandschutzanwendungen auf Basis von Polyurethan bereitstellen zu können, die sich durch eine verbesserte $CO_2$-Bilanz auszeichnen.

Die Aufgabe der Erfindung ist daher geschäumte Formkörper für Brandschutzanwendungen auf Basis von Polyurethan bereitzustellen, die eine verbesserte $CO_2$-Bilanz im Vergleich zu den bekannten Formkörpern für Brandschutzanwendungen aufweisen. Die geschäumten Formkörper sollen mindestens vergleichbare, bevorzugt verbesserte, Brandschutzeigenschaften hinsichtlich Aschekrustenbildung und Expansionsverhalten aufweisen wie bereits aus dem Stand der Technik bekannte geschäumte Formkörper auf Basis von Polyurethanen.

Die der Erfindung zugrundeliegende Aufgabe konnte überraschenderweise durch den Einsatz eines recycelten Kautschukproduktes in einer Polyol-basierten Basiszusammensetzung gemäß Anspruch 1 gelöst werden.

Ein zweiter Gegenstand der Erfindung ist ferner eine Schaumzusammensetzung umfassend die Polyol-basierte Basiszusammensetzung und mindestens ein Polyisocyanat.

Ein dritter Gegenstand der Erfindung ist ein aus der Schaumzusammensetzung hergestellter Formkörper für Brandschutzanwendungen.

Ein vierter Gegenstand der Erfindung ist auch ein Verfahren zur Herstellung des Formkörpers aus der Polyol-basierten Basiszusammensetzung.

Ein fünfter Gegenstand ist auch die Verwendung mindestens eines recycelten Kautschukproduktes in einem geschäumten Formkörper auf Basis von Polyurethan zur Verbesserung der $CO_2$-Bilanz des geschäumten Formkörpers.

Zum besseren Verständnis der Erfindung werden die folgenden Erläuterungen der hierin verwendeten Terminologie als sinnvoll erachtet. Im Sinne der Erfindung bedeutet:

- *"Polyol-basierte Basiszusammensetzung"* ist eine Zusammensetzung umfassend mindestens ein Polyol, mindestens ein dämmschichtbildendes Additiv, mindestens ein recyceltes Kautschukprodukt und ein Treibmittel. Die Polyol-basierte Basiszusammensetzung ist so gestaltet, dass eine Reaktion der Komponenten erst nach Mischen mit mindestens einem Polyisocyanat stattfindet.

- *"Schaumzusammensetzung"* ist eine homogenisierte, teil-homogenisierte oder nichthomogenisierte Zusammensetzung umfassend die Polyol-basierte BasisZusammensetzung und mindestens ein Polyisocyanat.

- *"Formkörper"* bezeichnet das aufgeschäumte Reaktionsprodukt der Polyol-basierten Zusammensetzung mit mindestens einem Polyisocyanat, welches durch einen Formgebungsprozess in eine vordefinierte Form gebracht wird.

- *"recycelte Kautschukprodukte"* ein in Pulver- oder Granulatform vorliegendes Material, welches aus einem bereits industriell gefertigten (Abfall-)Produkt gewonnen wird und Kautschuk umfasst.

- *"Kautschuk"* sämtliche elastische Polymere, aus denen Gummi hergestellt wird. Kautschuk kann natürlichen Ursprungs sein (Naturkautschuk) oder synthetisch hergestellt werden.

- *"Isocyanate"* sind Verbindungen, die eine funktionelle Isocyanatgruppe -N=C=O aufweisen und durch die Struktureinheit R-N=C=O charakterisiert werden (mit R als organischem Rest);

- *"Polyisocyanate"* sind Verbindungen, die mindestens zwei funktionelle Isocyanatgruppen -N=C=O aufweisen; Diisocyanate, die auch unter die Definition von Polyisocyanat fallen, werden beispielsweise durch die Struktur O=C=N-R-N=C=O charakterisiert, wobei R einen beliebigen organischen Rest darstellt;

- *"mittlere NCO-Funktionalität"*, beschreibt die Anzahl an Isocyanatgruppen in der Verbindung; bei einer Mischung aus Isocyanaten beschreibt die "gemittelte NCO-Funktionalität" die gemittelte Anzahl an Isocyanatgruppen in der Mischung und wird nach der Formel: gemittelte NCO-Funktionalität (Mischung) = $\Sigma$ mittlere NCO-Funktionalität (Isocyanat i) / $n_i$, also die Summe der mittleren NCO-Funktionalität der Einzelkomponente geteilt durch den gewichtsprozentualen Anteil der Einzelkomponente, ermittelt;

- Als *"Alkohole"* werden organische Verbindungen bezeichnet, bei denen mindestens eine Hydroxylgruppe -OH an ein Kohlenstoffatom gebunden ist. "Polyole" sind Alkohole, die mindestens zwei funktionelle Hydroxylgruppen -OH aufweisen;

- *"OH-Funktionalität"* eines Alkohols beschreibt die Anzahl aktiver Wasserstoffatome pro Polyol, die mit einer Isocyanatgruppe reagieren können;

- *"ein", "eine", "einer"* als Artikel vor einer chemischen Verbindungsklasse, z.B. vor dem Wort "Isocyanat", dass eine oder mehrere unter diese chemische Verbindungsklasse fallende Verbindungen, z.B. verschiedene Isocyanate gemeint sein können. In einer bevorzugten Ausführungsform ist mit diesem Artikel nur eine einzelne Verbindung gemeint;

- *"mindestens ein", "mindestens eine", "mindestens einer"* zahlenmäßig *"ein oder mehrere"*. In einer bevorzugten Ausführungsform ist mit diesem Begriff zahlenmäßig *"ein", "eine", "einer"* gemeint;

- *"enthalten", "umfassen"* und *"beinhalten"*, dass neben den genannten Bestandteilen noch weitere vorhanden sein können. Diese Begriffe sind einschließlich gemeint und umfassen daher auch *"bestehen aus"*. *"Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus";*

Polyol-basierte Basiszusammensetzung

Erfindungsgemäß umfasst die Polyol-basierte Basiszusammensetzung mindestens ein Polyol.
Vorzugsweise wird das Polyol ausgewählt aus der Gruppe der Polyetherpolyole.
Der Begriff der Polyole im Sinne der vorliegenden Erfindung beschreibt alle Verbindungen mit zwei oder mehr Hydroxylgruppen. Die Polyetherpolyole sind aus einem Polyether-Grundgerüst aufgebaut. Das Grundgerüst kann linear oder verzweigt aufgebaut sein und die funktionellen Hydroxylgruppen terminal und/oder entlang der Kette enthalten.
Die Polyetherpolyole werden vorzugsweise durch Polymerisation von Epoxiden wie Ethylenoxid, Propylenoxid, Butylenoxid, Tetrahydrofuran, Styroloxid oder Epichlorhydrin mit sich selbst oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine hergestellt. Besonders bevorzugte Epoxide sind Ethylenoxid und Propylenoxid.

Beispiele geeigneter kommerziell erhältlicher Polyetherpolyole umfassen: ACCLAIM® POLYOL 12200 N, ACCLAIM® POLYOL 18200 N, ACCLAIM® POLYOL 4200, ACCLAIM® POLYOL 6300, ACCLAIM® POLYOL 8200 N, ARCOL® POLYOL 1070, ARCOL® POLYOL 1 105 S, DESMOPHEN® 1 1 10 BD, DESMOPHEN® 1 11 1 BD, DESMOPHEN® 1262 BD, DESMOPHEN® 1380 BT, DESMOPHEN® 1381 BT, DESMOPHEN® 1400 BT, DESMOPHEN® 2060 BD, DESMOPHEN® 2061 BD, DESMOPHEN® 2062 BD, DESMOPHEN® 3061 BT, DESMOPHEN® 401 1 T, DESMOPHEN® 4028 BD, DESMOPHEN® 4050 E, DESMOPHEN® 5031 BT, DESMOPHEN® 5034 BT, DESMOPHEN® 10WF15, DESMOPHEN® 10WF16, DESMOPHEN® 10WF18, DESMOPHEN® 5168T und DESMOPHEN® 5035 BT (Bayer; Covestro); Lupranol 2043, Lupranol 2048, Lupranol 2090, Lupranol 2092, Lupranol 2095, Pluriol E600 (BASF); Voranol CP 755, Voranol RA 800, Voranol CP 6001 , Voranol EP 1900 (Dow) oder Mischungen aus Polyester und Polyetherpolyolen wie WorleePol 230 (Worlee).

In einer weiteren Ausführungsform der Erfindung kann die Polyol-basierte Basiszusammensetzung zusätzlich mindestens ein nachhaltiges Polyol umfassen. Der Begriff "nachhaltige Polyole" im Sinne der vorliegenden Erfindung ist ein Sammelbegriff für alle Polyole, die ein Naturöl, eine sonstige natürlich vorkommende Verbindung oder einem Consumer-Abfallprodukt sind oder aus einem solchen durch chemische Modifikation hergestellt wurden. Insbesondere fallen unter den Begriff des nachhaltigen Polyols naturölbasierte Polyole und biobasierte Polyole, aber auch Polyole, welche durch einen Recyclingprozess derart aufbereitet werden, dass sie als Polyoledukt eingesetzt werden können.

In einer bevorzugten Ausführungsform ist das nachhaltige Polyol ein Polyol basierend auf einem oder mehreren Naturölen. Der Begriff *"Naturöl"* im Sinne der vorliegenden Erfindung ist definiert als ein Ausgangsmaterial, welches nicht vom Erdöl abgeleitet wird. Hierzu zählen insbesondere Öle, die von einer Pflanze, einschließlich deren Früchte, Schalen, Nüsse und/oder Samen stammen. Es können aber auch tierische Fette und/oder Öle oder jedes andere nicht vom Erdöl abgeleitete Öl eingesetzt werden.

Beispiele für solche natürlichen Naturöle als Ausgangsmaterialien für nachhaltige Polyole sind beispielsweise Sojabohnenöl, Canolaöl, Cashewnußschalenöl, Sonnenblumenöl, Maisöl, Leinsamenöl, Mohnsamenöl, Baumwollsamenöl, Tungöl, Palmöl, Erdnussöl, Fischöl, Olivenöl, Safloröl, Rapsöl, Rizinusöl und Kokosöl.

Zur Herstellung der nachhaltigen Polyole basierend auf einem oder mehreren Naturölen werden die natürlichen Öle beispielsweise durch ein geeignetes Verfahren hydroxyliert oder alkoxyliert. In diesem Zusammenhang wird auf die Patentschrift EP2202256 A1 verwiesen, worin geeignete Verfahren zur Hydroxylierung bzw. Alkoxylierung von Naturölen beschrieben werden.

Cashewnußschalenöl ist als Ausgangmaterial zur Herstellung der nachhaltigen Polyole besonders bevorzugt. Ganz besonders bevorzugt sind demnach auf Cashew-Nussschalenöl basierende Polyetherpolyole und Cashew-Nussschalenöl basierende Polyesterpolyole.

Es ist auch möglich, dass als nachhaltiges Polyol ein recyceltes Polyol eingesetzt wird. Der Begriff "recyceltes Polyol" im Sinne der vorliegenden Erfindung bezeichnet ein Polyol, welches durch das Recycling von polyurethan-basierten Konsumgütern - wie beispielsweise Polyurethanmatratzen - hergestellt wurde.

Kommerziell sind recyclierte Polyole auf Basis von polyurethanbasierten Matratzen von der Fa. Dow unter der Marke Renuva® oder von der Fa. RAMPF unter der Marke Recypol® erhältlich.

Der gewichtsprozentuale Anteil aller Polyole der Polyol-basierten Basiszusammensetzung beträgt vorzugsweise 20 Gew.-% bis 95 Gew.-%. Bezogen auf das Gesamtgewicht der Schaumzusammensetzung beträgt der gewichtsprozentuale Anteil aller Polyole vorzugsweise > 10 Gew.-% bis 95 Gew.-%, weiter bevorzugt 20 Gew.-% bis 90 Gew.-%, noch weiter bevorzugt 25 Gew.-% bis 80 Gew.-%.

Recyceltes Kautschukprodukt

Die erfindungsgemäße Polyol-basierte Basiszusammensetzung und die erfindungsgemäße Schaumzusammensetzung umfassen mindestens ein recyceltes Kautschukprodukt.

Der Begriff *"recyceltes Kautschukprodukt"* im Sinne der vorliegenden Erfindung beschreibt einen in Pulver- oder Granulatform vorliegendes Material, welches aus einem bereits industriell gefertigten (Abfall-)Produkt gewonnen wird, welches Kautschuk umfasst. Das industrielle gefertigte (Abfall-)Produkt wird durch einen Aufbereitungsprozess, wie beispielsweise Schreddern, Granulieren oder Mahlen gefolgt von einem Siebprozess in eine Pulver- oder Granulatform überführt, welche dann als recycelter Wertstoff eingesetzt werden kann.

Vorzugsweise umfasst das industriell gefertigte (Abfall-)Produkt, aus welchem das recycelte Kautschukprodukt gewonnen wird, einen gewichtsprozentualen Kautschukanteil von mindestens 20 Gew.-%, weiter bevorzugt mindestens 30 Gew.-% und noch weiter bevorzugt mindestens 40 Gew.-%. Üblicherweise umfasst das recycelte Kautschukprodukt neben Kautschuk diverse Füllstoffe wie beispielsweise Ruß, Weichmacher, Festigkeitsträger wie Stahl und/oder Nylon und Schwefel.

Ein besonders geeignetes (Abfall-)Produkt zur Herstellung des recycelten Kautschukproduktes sind Reifen und Reifenprodukte. Der Begriff "Reifenprodukte" beschreibt dabei sowohl Materialien, die bei der Reifenproduktion als Abfall- oder Ausschussmaterialien entstehen als auch sogenannte "Altreifen", d.h. Reifen, die nicht für die weitere Verwendung an einem Fortbewegungsmittel, wie beispielsweise einem Auto, vorgesehen sind.

Das recycelte Kautschukprodukt hat bevorzugt eine Partikelgröße von 0,1 bis 3 mm, wobei die Partikelgröße mittels Siebanalyse bestimmt werden kann. Vorzugsweise hat das recycelte Kautschukprodukt eine Partikelgröße von 0,2 bis 1 mm, weiter bevorzugt von 0,5 bis 0,8 mm. Die Verwendung von geringeren Partikelgrößen birgt produktionstechnisch die Gefahr einer hohen Staubbelastung. Die Verwendung größerer Partikelgrößen kann zu sichtbaren Inhomogenitäten im Formkörper führen.

Das recycelte Kautschukprodukt wird vorzugsweise in einem gewichtsprozentualen Bereich von 1 bis 30 Gew.-% bezogen auf das Gesamtgewicht der Schaumzusammensetzung, insbesondere in einem Anteil von 2 Gew.-% bis 22 Gew.- %, weiter bevorzugt in einem Anteil von 5 Gew.-% bis 20 Gew.-% in der erfindungsgemäßen Schaumzusammensetzung eingesetzt.

Kommerziell sind recycelte Kautschukprodukte beispielsweise von der Fa. Genan unter der Handelsbezeichnung Genan Powders oder von der Fa. Prisimi unter der Handelsbezeichnung SBR, EPDM, CR oder BIIR erhältlich.

Dämmschichtbildendes Additiv

Erfindungsgemäß enthält die Polyol-basierte Basiszusammensetzung ein dämmschichtbildendes Additiv, wobei das Additiv sowohl eine einzelne Verbindung als auch ein Gemisch von mehreren Verbindungen umfassen kann.

Zweckmäßig werden als dämmschichtbildende Additive solche eingesetzt, die unter Hitzeeinwirkung aufblähen und eine isolierende Schicht aus schwerentflammbarem Material bilden. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-Polyole, PO-Polyole sowie EO-PO-Polyole. Bevorzugt werden Pentaerythrit, Dipentaerythrit oder Polyvinylacetat eingesetzt.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$, $CO_2$, $H_2O$, NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferanten, einen Dehydrierungskatalysator und ein Gasbildner als auch thermisch expandierbare Verbindungen umfasst.

Prinzipiell kann das dämmschichtbildende Additiv in einem großen gewichtsprozentualen Bereich in der Polyol-basierten Basiszusammensetzung enthalten sein, nämlich bevorzugt in einer Menge von 5 bis 80 Gew.-%. Wird die isolierende Schicht durch physikalische Intumeszenz gebildet, ist das dämmschichtbildende Additiv vorzugsweise in einer Menge von 5 bis 50 Gew.-% bezogen auf das Gesamtgewicht der Schaumzusammensetzung enthalten. Um hier eine möglichst hohe Intumeszenzrate zu bewirken, wird der Anteil des dämmschichtbildenden Additivs in der Gesamtformulierung so hoch wie möglich eingestellt, wobei darauf geachtet werden muss, dass die Viskosität der Zusammensetzung nicht zu hoch wird, damit sich die Zusammensetzung noch gut verarbeiten lässt. Bevorzugt beträgt der Anteil 5 bis 50 Gew.-% und besonders bevorzugt 10 bis 50 Gew.-%, bezogen auf das Gesamtgewicht der Schaumzusammensetzung.

Da die im Brandfall gebildete Aschekruste in der Regel zu instabil ist und abhängig von deren Dichte und Struktur etwa durch Luftströmungen Verblasen werden kann, was sich negativ auf die isolierende Wirkung auswirkt, wird zu den eben aufgeführten Komponenten bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern. Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von <50 μm, vorzugsweise von 0,5 bis 10 μm besitzt. Im Fall der Verwendung des teilchenförmigen Metalls in Form von Fasern, Fäden und/oder Whiskers ist eine Dicke von 0,5 bis 10 μm und eine Länge von 10 bis 50 μm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere Flammschutzmittel zugesetzt werden, wie Phosphatester, halogenhaltige Verbindungen wie z.B. Tri-(2-chlorisopropyl)-phosphat (TOPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzzmittel können bevorzugt in einer Menge von 3 bis 6 Gew.-%, bezogen auf die gesamte Zusammensetzung, enthalten sein.

Treibmittel

Erfindungsgemäß enthält die Polyol-basierte Basiszusammensetzung ein Treibmittel. Als Treibmittel kommen prinzipiell alle dem Fachmann bekannten chemischen und physikalischen Treibmittel in Betracht. Hierzu zählen insbesondere solche Treibmittel, die in der Lage sind, $CO_2$ oder $H_2$ freizusetzen.

Vorzugsweise enthält die Polyol-basierte Basiszusammensetzung ein Treibmittel, welches ein oder mehrere Verbindungen umfasst, die in der Lage sind durch Reaktion Kohlendioxid ($CO_2$) freizusetzen. Als Treibmittel sind alle gängigen chemischen Treibmittel geeignet, die durch chemische Reaktion zwischen zwei Bestandteilen Kohlendioxid freisetzen.

Erfindungsgemäß ist das Treibmittel so ausgestaltet, dass eine Reaktion erst nach Aktivierung stattfindet. Als Aktivierung ist auch das Vermischen mit einer weiteren Komponente, wie beispielsweise dem später beschriebenen Polyisocyanat, zu verstehen.

In der einfachsten Ausgestaltung der Erfindung umfasst das Treibmittel Wasser bzw. besteht aus Wasser, welches nach Vermischen mit dem Polyisocyanat Kohlendioxid freisetzt. Unter dem Begriff "Wasser" werden erfindungsgemäß in diesem Zusammenhang auch wasserfreisetzende Komplexe, Addukte und Einschlussverbindungen verstanden. Der gewichtsprozentuale Anteil des Wassers beträgt vorzugsweise 0,1 bis 10 Gew.-%, bevorzugter 0,2 bis 8 Gew.-% und weiter bevorzugt 0,2 bis 6 Gew.-% bezogen auf das Gesamtgewicht der Schaumzusammensetzung.

Weitere Beispiele für Treibmittel sind Alkane wie n-Pentan, iso-Pentan, Gemische aus iso- und n-Pentan, Cyclopentan, Cyclohexan, Mischungen aus Butanisomeren und den genannten Alkanen, halogenierte Olefine oder halogenierte Verbindungen wie zum Beispiel Dichlormethan, Dichlormonofluormethan, Difluormethan, Trifluormethan, Difluorethan, 1,1,1,2-Tetrafluroethan, Tetrafluorethan, 1,1,1,3,3,3-Hexafluorpropan, 1,1,1,3,3-Pentafluorpropan, Chlordifluorethan, 1,1-Dichlor-2,2,2-Trifluorethan, 2,2-Dichlor-2-fluorethan, Heptafluorpropan und Schwefelhexafluorid und Kohlendioxid. Bevorzugt werden Kohlendioxid, Cyclopentan, n-Pentan und iso-Pentan einzeln oder als Gemisch, gegebenenfalls in der Abmischung mit Wasser, eingesetzt. Weitere geeignete Treibmittel sind Carbonsäuren wie Ameisensäure, Essigsäure, Oxalsäure und chemische Treibmittel, die im Verlauf des Schäumprozesses Gase freisetzen, wie zum Beispiel Azoverbindungen. Bevorzugt werden diese Treibmittel in Kombination mit Wasser eingesetzt.

In einer anderen Ausführungsform umfasst das Treibmittel eine Säure und eine Verbindung, die mit Säuren unter Bildung von Kohlendioxid reagieren kann.

Als Verbindungen, die mit Säuren unter Bildung von Kohlendioxid reagieren können, können carbonat- und hydrogencarbonathaltige Verbindungen, insbesondere Metall- oder (insbesondere quarternäre) Ammoniumcarbonate verwendet werden, wie Carbonate von Alkali - oder Erdalkalimetallen, zum Beispiel $CaCO_3$, $NaHCO_3$, $Na_2CO_3$, $K_2CO3$, $(NH_4)_2CO_3$ und dergleichen, wobei CaCOs bevorzugt ist.

Als Säure kann jede saure Verbindung verwendet werden, die in der Lage ist, mit carbonat- oder hydrogencarbonathaltigen Verbindungen unter Abspaltung von Kohlendioxid zu reagieren, wie etwa Phosphorsäure, Salzsäure, Schwefelsäure, Ascorbinsäure, Polyacrylsäure, Benzoesäure, Toluolsulfonsäure, Weinsäure, Glycolsäure Milchsäure; organische Mono-, Di- oder Polycarbonsäuren, wie Essigsäure, Chloressigsäure, Trifluoressigsäure, Fumarsäure, Maleinsäure, Zitronensäure oder dergleichen, Aluminiumdihydrogenphosphat, Natriumhydrogensulfat, Kaliumhydrogensulfat, Aluminiumchlorid, Harnstoffphosphat und andere säurefreisetzende Chemikalien oder Mischungen von zwei oder mehreren davon. Die Säure erzeugt das Gas als eigentliches Treibmittel.

Als Säure-Komponente kann eine wässrige Lösung einer anorganischen und/oder organischen Säure, benutzt werden. Ferner können gepufferte Lösungen von Zitronen-, Wein-, Essig-, Phosphorsäure und dergleichen verwendet werden.

Um dem zu bildenden Schaum eine höhere Stabilität zu verleihen, müssen die gebildeten Zellen bis zur Aushärtung des Bindemittels stabil bleiben, um den Kollaps der polymeren Schaumstruktur zu verhindern. Eine Stabilisierung wird umso notwendiger, je niedriger die Dichte des Schaumstoffes sein soll, d.h. je größer die Volumenexpansion ist. Eine Stabilisierung wird gewöhnlich mittels Schaumstabilisatoren bzw. -regulatoren, auch bekannt als Zellöffner bekannt, erreicht.

Sofern erforderlich kann die erfindungsgemäße Polyol-basierte Basiszusammensetzung daher ferner einen Schaumstabilisator/-regulator enthalten. Hierzu eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2- Ethylhexanol, 1-Decanol, 1-Undecanol, 1-Dodecanol (Laurylalkohol), 1-Tetradecanol (Myristylalkohol) und 1- Octadecanol (Stearylalkohol). Es können auch Gemische der genannten längerkettigen Monoalkohole eingesetzt werden. Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Polyether-Polysiloxane, Ester der Sulfobernsteinsäure und/oder Alkali- oder Erdalkalimetallalkanoate eingesetzt. Besonders bevorzugt werden EO/PO-Blockcopolymere eingesetzt.

Erfindungsgemäße Schaumzusammensetzung

Ein zweiter Gegenstand der vorliegenden Erfindung ist auch eine Schaumzusammensetzung umfassend die zuvor beschriebene Polyol-basierte Basiszusammensetzung und mindestens ein Polyisocyanat. Zur Herstellung der Schaumzusammensetzung werden die Komponenten der Polyol-basierten Basiszusammensetzung mit dem Polyisocyanat vermischt und homogenisiert.

Als Polyisocyanat können alle dem Fachmann bekannten aliphatischen, cycloaliphatischen und/oder aromatischen Isocyanate mit einer mittleren NCO-Funktionalität von 2 oder höher, einzeln oder in beliebigen Mischungen untereinander, verwendet werden. Die NCO-Funktionalität gibt an, wie viele NCO-Gruppen in dem Polyisocyanat vorhanden sind. Polyisocyanat bedeutet dabei, dass zwei oder mehr NCO-Gruppen in der Verbindung enthalten sind.

Geeignete aromatische Polyisocanate sind solche mit aromatisch gebundenen Isocyanatgruppen, wie Diisocyanatobenzole, Touloldiisocyanate, Diphenyldiisocyanate, Diphenylmethandiisocyanate, Diisocyanatonaphathaline, Triphenylmethantriisocyanate, aber auch solche mit Isocyanatgruppen, die über eine Alkylengruppe, wie etwa eine Methylengruppe an einen Aromaten gebunden sind, wie Bis- und Tris-(isocyanatoalkyl)-benzole, -toluole sowie -xylole.

Bevorzugte Beispiele für aromatische Polyisocyanate sind: 2,2'-, 2,4'- und 4,4'-Diphenylmethandiisocyanat, 1,3-Phenylendiisocyanat, 1,4-Phenylendiisocyanat, 2,4-Toluylendiisocyanat, 2,5-Toluylendiisocyanat, 2,6-Toluylendiisocyanat, 1,3-Xylylendiisocyanat, 1,4-Xylylendiisocyanat, Tetramethyl-1,3-xylylendiisocyanat, Tetramethyl-1,4-xylylendiisocyanat, 1,3-Bis(isocyanatomethyl)benzol, 1,4-Bis(isocyanatomethyl)benzol, Ethylphenyldiisocyanat, 2-Dodecyl-1,3-phenylendiisocyanat, 2,4,6-Triisopropyl-m-phenylendiisocyanat, 2,4,6-Trimethyl-1,3-phenylendiisocyanat, Xylylendiisocyanat, 1,5-Naphthylendiisocyanat, 3,3'- Dimethyl-4,4'-biphenyldiisocyanat, 3,3'-Dimethoxy-4,4'-biphenyldiisocyanat, 3,3'- Dimethyl-4,4'-biphenyldiisocyanat, Diphenylenmethan-2,4'-diisocyanat, Diphenylenmethan-2,2'-diisocyanat, Diphenylenmethan-4,4'-diisocyanat, Triphenylmethan-4,4',4"-triisocyanat, 5-(p-Isocyanatobenzyl)-2-methyl-m-phenylendiisocyanat, 4,4-Diisocyanato-3,3,5,5-tetraethyldiphenylmethan, 5,5'-Ureylendi-o-tolyldiisocyanat, 4-[(5-Isocyanato-2-methylphenyl)methyl]-m-phenylendiisocyanat, 4-[(3-isocyanato-4-methylphenyl)methyl]-m-phenylendiisocyanat, 2,2'-Methylen-bis[6-(o-isocyanatobenzyl)phenyl]diisocyanat. Es können auch polymere Polyisocyanate, insbesondere polymeres Diphenylmethandiisocyanat, eingesetzt werden.

Beispiele für aliphatische Polyisocyanate sind Bis-(isocyanatoalkyl)ether oder Alkandiisocyanate, wie Methandiisocyanat, Propandiisocyanate, Butandiisocyanate, Pentandiisocyanate, Hexandiisocyanate (z.B. Hexamethylendiisocyanat, HDI), Heptandiisocyanate (z.B. 2,2-Dimethylpentan-1,5- diisocyanat, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5- Methylnonandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H$_6$XDI), 3-Isocyanatomethyl-3,5,5-trimethylcyclohexylisocyanat (Isophorondiisocyanat, IPDI), Bis- (4-isocyanatocyclohexyl)methan (H$_{12}$MDI), Bis-(isocyanatomethyl)norbornan (NBDI) oder 3(4)-Isocyanatomethyl-1-methyl-cyclohexylisocyanat (IMCI), Octagydro-4,7- methano-1 H-indendiemthyldiisocyanat, Norbornendiisocyanat, 5-Isocyanato-1-(isocyanatomethyl)-1,3,3-trimethylcyclohexan, Ureylenbis(p-phenylenmethylene-p-phenylen)diiscoyanat.

Vorzugsweise können die Polyisocyanate auch als Präpolymere, Biurete, Isocyanurate, Iminooxadiazindione, Uretdione und/oder Allophanate vorliegen, die durch Oligomerisierung von difunktionellen Isocyanaten oder durch Umsetzung der Isocyanatverbindungen mit Polyolen oder Polyaminen, einzeln oder als Gemisch, hergestellt werden können, und die eine mittlere NCO-Funktionalität von 2 oder größer aufweisen.

Beispiele für geeignete, kommerziell erhältliche Polyisocyanate sind Desmodur@ N 3900, Desmodur® N 100, Desmodur@ Ultra N 3200, Desmodur@ Ultra N 3300, Desmodur@ Ultra N 3600, Desmodur® N 3800, Desmodur® XP 2675, Desmodur® 2714, Desmodur® 2731, Desmodur® N 3400, Desmodur@ XP 2679, Desmodur@ XP 2731, Desmodur®XP 2489, Desmodur® E 3370, Desmodur®XP 2599, Desmodur®XP 2617, Desmodur@ XP 2406, Desmodur@ XP 2551 , Desmodur@ XP 2838, Desmodur@ XP 2840, Desmodur®VL, Desmodur®VL 50, Desmodur®VL 51 , Desmodur® ultra N 3300, Desmodur® eco N 7300, Desmodur® E23, Desmodur® E XP 2727, Desmodur® E 30600, Desmodur® E 2863XPDesmodur® H, Desmodur® VKS 20 F, Desmodur® 44V20L, Desmodur® 44P01, Desmodur® 44V70 L, Desmodur® N3400, Desmodur® N3500 (jeweils erhältlich von Covestro AG), Tolonate™ HDB, Tolonate™ HDB-LV, Tolonate™ HDT, Tolonate™ HDT- LV, Tolonate™ HDT-LV2 (erhältlich von Vencorex), Basonat® HB 100, Basonat® HI 100, Basonat®

HI 2000 NG (erhältlich von BASF), Takenate® 500, Takenate® 600, Takenate® D-132N(NS), Stabio® D-376N (jeweils erhältlich von Mitsui), Duranate® 24A-100, Duranate® TPA-100, Duranate® TPH-100 (jeweils erhältlich von Asahi Kasai), Coronate® HXR, Coronate® HXLV, Coronate® HX, Coronate® HK, (jeweils erhältlich von Tosoh), Voranate T-80 (Type I and II), Isonate 181, Isonate 240, Isonate 125M, Isonate 125 MDR, Isonate 143L, Isonate 50 O,P', PAPI 20, PAPI 27, PAPI 94, PAPI 95, PAPI 901, PAPI 580N (jeweils von DOW)..

Der gewichtsprozentuale Anteil des Polyisocyanats bezogen auf das Gesamtgewicht der Schaumzusammensetzung beträgt vorzugsweise > 0 Gew.% bis 50 Gew.-%, weiter bevorzugt 1 Gew.-% bis 40 Gew.-%, noch weiter bevorzugt 5 Gew.-% bis 35 Gew.-%.

Die gewichtsprozentualen Mengenverhältnisse des Polyisocyanats und der Polyole werden bevorzugt so gewählt, dass das Äquivalentverhältnis von Isocyanatgruppen zu - OH-Gruppen zwischen 0,1 und 1,7, bevorzugt zwischen 0,2 und 1,2 und stärker bevorzugt zwischen 0,4 und 1,1 liegt.

Bevorzugt wird ein Katalysator sowohl für die Reaktion der Polyisocyanats mit dem Polyol als auch für die Reaktion des Isocyanats mit dem Treibmittel verwendet. In einer bevorzugten Ausführungsform der Erfindung umfasst die Schaumzusammensetzung einen Schaum- und Gelkatalysator. Vorzugsweise werden hierbei N,N,N'-trimethyl-N'-hydroxyethylbisaminoethylether (Jeffcat ZF-10), Bis-(2-dimethylaminoethyl)ether (Jeffcat ZF-20), 70% Bis-(2-dimethylaminoethyl)ether in dipropylenglycol (Jeffcat ZF-22), N-[2-[2-(dimethylamino)ethoxy]ethyl]-N-methyl-1,3-Propanediamine (Dabco NE300) oder 1,4-Diazabicyclo[2.2.2]octan in Dipropyleneglykol (DABCO 33LV) eingesetzt.

Beispiele weiterer Verbindungen, die als Katalysator eingesetzt werden können sind Zinnoctoat, Zinnoxalat, Zinnchlorid, Dioctylzinndi-(2-ethylhexanoat), Dioctylzinndilaurat, Dioctylzinndithioglykolat, Dibutylzinndilaurat, Monobutylzinntris-(2-ethylhexanoat), Dioctylzinndineodecanoat, Dibutylzinndineodecanoat, Dibutylzinndiacetat, Dibutylzinnoxid, Monobutylzinndihydroxychlorid, Organozinnoxid, Monobutylzinnoxid, Dioctylzinndicarboxylat, Dioctylzinnstannoxan, Bismutcarboxylat, Bismutoxid, Bismutneodecanoat, Zinkneodecanoat, Zinkoctoat, Zinkacetylacetonat, Zinkoxalat, Zinkacetat, Zinkcarboxylat, Aluminiumchelatkomplex, Zirkoniumchelatkomplex, Dimethylaminopropylamin, N,N-Dimethylcyclohexylamin, N,N- Dimethylethanolamin, N-(3- Dimethylaminopropyl)-N,N-diisopropanolamin, N-Ethylmorpholin, /V-Methylmorpholin, Pentamethyldiethylentriamin und/oder Triethylendiamin.

In einer Ausführungsform enthält die erfindungsgemäße Zusammensetzung ferner mindestens einen weiteren Bestandteil, ausgewählt unter Weichmachern, Vernetzungsmitteln, Bioziden, organischen und/oder anorganischen Zuschlagstoffen und/oder weiteren Additiven.

Der Weichmacher hat die Aufgabe, das ausgehärtete Polymernetzwerk weich zu machen. Ferner hat der Weichmacher die Aufgabe, eine zusätzliche flüssige Komponente einzubringen, so dass die Füllstoffe vollständig benetzt werden und die Viskosität so eingestellt wird, dass die Beschichtung verarbeitungsfähig wird. Der Weichmacher kann in solch einer Menge in der Zusammensetzung enthalten sein, dass er die eben beschriebenen Funktionen hinreichend erfüllen kann.

Geeignete Weichmacher sind unter Derivaten der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Adipinsäure, Sebacinsäure, Fumarsäure, Maleinsäure, Itaconsäure, Caprylsäure und Zitronensäure, Alkylphosphatestern und Derivaten von Polyestern und Polyethern, epoxidierten Ölen, $C_{10}$-$C_{21}$-Alkylsulfonsäureestern des Phenols und Alkylestern ausgewählt. Bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerins mit Epoxidgruppen und Esterderivate der Phosphate. Stärker bevorzugt ist der Weichmacher Bis(2-ethylhexyl)terephthalat, T rihydroxymethylpropylcaprylat, Triethylenglycol-bis(2-ethylhexanoat), 1 ,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus n-Octyl- und n-Decylsuccinat. Am stärksten bevorzugt ist der Weichmacher ein Phosphatester, da diese sowohl als Weichmacher als auch als Flammschutzmittel wirken können.

In der Zusammensetzung kann der Weichmacher bevorzugt in einer Menge bis zu 30 Gew.-%, weiter bevorzugt bis zu 20 Gew.-% und stärker bevorzugt bis zu 8 Gew.-%, bezogen auf die gesamte Zusammensetzung, enthalten sein.

Die Zusammensetzung kann neben den bereits beschriebenen Additiven gegebenenfalls übliche Hilfsmittel wie Netzmittel, etwa auf Basis von Polyacrylaten und/oder Polyphosphaten, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker und/oder Rheologieaddtive, sowie Füllstoffe können der Zusammensetzung zugegeben werden. Als Rheologieaddtive, wie AntiAbsetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieaddtive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Ein weiterer Gegenstand der vorliegenden Erfindung ist auch ein aus der erfindungsgemäßen Schaumzusammensetzung hergestellter aufgeschäumter Formkörper für Brandschutzanwendungen. Hierzu wird werden die Komponenten der Polyol-basierten Basiszusammensetzung mit dem Polyisocyanat vermischt und homogenisiert. Vorzugsweise erfolgt die Vermischung und Homogenisierung über einen Mischkopf. Die homogenisierte Schaumzusammensetzung wird in ein formgebendes Element mit vordefinierter Geometrie eingebracht. In Folge der Reaktion des Polyisocyanats mit dem Polyol und dem Treibmittel erfolgt ein Aufschäumen im formgebenden Element. Im Anschluss an die vollständige Härtungsreaktion kann das formgebende Element entfernt werden und der geschäumte Formkörper entnommen werden.

Vorzugsweise hat der geschäumte Formkörper einen gewichtsprozentualen Polyurethananteil in einem Bereich von weniger als 95 Gew.-%, bevorzugt in einem Bereich von 50 bis 85 Gew.-%. Durch den erfindungsgemäßen Einsatz des recycelten Kautschukproduktes in der Schaumzusammensetzung kann der gewichtsprozentuale Anteil des Polyisocyanats und des Polyols zugunsten des recycelten Kautschukproduktes reduziert werden. Hieraus resultiert insgesamt ein verringerter Polyurethan-Anteil im geschäumten Formkörper.

Der geschäumte Formkörper hat vorzugsweise einen rechteckigen Querschnitt. Dadurch lassen sich die Formkörper besonders einfach und lückenlos Brandschutzprofile in einem Wand- oder Deckendurchbruch verarbeiten.

Ein fünfter Gegenstand ist auch die Verwendung mindestens eines recycelten Kautschukproduktes in einem geschäumten Formkörper auf Basis von Polyurethan zur Verbesserung der $CO_2$-Bilanz des geschäumten Formkörpers.

Bevorzugt führt die Verwendung des recycelten Kautschukproduktes nicht nur zu einer Verbesserung der $CO_2$-Bilanz des geschäumten Formkörpers, sondern geht auch mit einer Verbesserung der Brandschutzeigenschaften einher, insbesondere kann durch die Verwendung des recycelten Kautschukproduktes das Expansionsvolumen im Brandfall verbessert werden und die Qualität der Aschekrustenbildung verbessert werden.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

## AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

**Tabelle 1:** Zusammensetzung des Referenzbeispiels sowie der erfindungsgemäßen Beispiele 1 und 2 [in Gew.-%]

| | | Referenz-beispiel | Beispiel 1 | Beispiel 2 |
|---|---|---|---|---|
| Polyol-basierte Basiszusammensetzung | Polyetherpolyol A | 29,57 | 26,77 | 23,95 |
| | Polyetherpolyol B | 19,90 | 18,01 | 16,12 |
| | Amingestartetes Polyetherpolyol | 2,06 | 1,86 | 1,67 |
| | Silikonbasierter Zellregulator | 4,50 | 4,07 | 3,65 |
| | Schäumungskatalysator | 0,26 | 0,24 | 0,21 |
| | Vergelungskatalysator | 0,53 | 0,48 | 0,43 |
| | Wasser | 0,58 | 0,52 | 0,47 |
| | Brandschutzfüllstoffe | 21,0 | 21,0 | 21,0 |
| | Recyceltes Kautschukprodukt (basierend auf Altreifen) | 0 | 7,50 | 15,00 |
| | Polymeres Diphenylmethandiisocyanat (pMDI) | 21,60 | 19,55 | 17,50 |

### Herstellung eines geschäumten Formkörpers (Schaumblock)

Die einzelnen Komponenten der Beispiele in Tabelle 1 wurden in einem geeigneten Behälter (z.B. einem Pappbecher) mit einem Holzspatel zu einer homogenen Mischung verrührt. Anschließend wurde der Mischung in eine Plastikform (20 cm × 13.5 cm × 5 cm) in einem verschließbaren Metallgehäuse gegeben und das Gehäuse verschlossen. Nach ca. 5 min wurde der geschäumte Formkörper aus der Form entfernt.

### Muffelofentest

Je Beispiel gemäß Tabelle 1 wurden zwei zylinderförmige Proben (Durchmesser 50 mm, Höhe 20 mm) aus den hergestellten Formkörpern ausgestanzt. Die Proben wurden gewogen und die exakten Höhen der Proben wurden mit einem Messschieber bestimmt. Daraus wurden das durchschnittliche Gewicht bzw. die durchschnittliche Höhe der Proben errechnet. Die zwei zylinderförmigen Proben der einzelnen Formkörper wurden in Metallzylinder (Durchmesser 50 mm, Höhe 100 mm, je eine Probe pro Metallzylinder) einer Metallvorrichtung platziert und mit einem 100 g Gewichtsstück (50 mm Durchmesser) bestückt. Die Metallvorrichtung mit den Proben wurde für 30 min in einen Muffelofen (Typ K0E60, Padelttherm GmbH) bei 650 °C gestellt. Anschließend wurden die Proben entnommen und über Nacht bei Raumtemperatur abgekühlt. Die jeweiligen Gewichte der Aschen wurden mit Hilfe einer handelsüblichen Waage bestimmt. Mit Hilfe eines Messschiebers wurden die jeweiligen Aschehöhen bestimmt.

### Berechnung des Expansionsfaktors

Der durchschnittliche Expansionsfaktor ergibt sich aus dem Quotienten der durchschnittlichen Endhöhe der Asche und der durchschnittlichen Ausgangshöhe der Probe (jeweils Doppelbestimmung).

Berechnung des Masseverlustes

Der Masseverlust errechnet sich wie folgt:

$$\text{Masseverlust (\%)} = (1 - (\frac{Masse\ der\ Asche}{Anfangsmasse\ der\ Probe})) \cdot 100$$

Angegeben ist jeweils der Durchschnittswert aus der oben beschriebenen Doppelbestimmung.

$CO_2$-Bilanz

Eine Abschätzung der $CO_2$-Bilanz wurde anhand literaturbekannter A1-Werte des Erderwärmungspotenzials der Formulierungsbestandteile vorgenommen. Die A1-Werte der jeweiligen Rohstoffe wurden mit den entsprechenden Gewichtsanteilen multipliziert und addiert. Waren die A1-Werte von Rohstoffen nicht bekannt, so wurden diese mit Werten für chemisch ähnliche Moleküle angenähert oder - falls es sich um Formulierungsbestandteile handelte, welche < 5 Gew.-% betrugen - nicht in die Rechnung miteinbezogen. Die so erhaltenen A1-Werte wurden auf eine 100% Formulierung normiert.

Ergebnisse

In Tabelle 2 ist ein Vergleich der Expansionseigenschaften und des Masseverlusts nach Hitzeeinwirkung der oben genannten Beispiele gezeigt.

**Tabelle 2:** Vergleich der Expansionseigenschaften und des Masseverlustes des Vergleichsbeispiels und der erfindungsgemäßen Beispiele **1** und **2** nach Hitzebehandlung im Muffelofen (30 min, 650 °C).

| | Vergleichsbeispiel | Beispiel 1 | Beispiel 2 |
|---|---|---|---|
| **Expansionsfaktor** | 1.83 (83%) | 2.00 (100%) | 2.22 (122%) |
| **Erhöhung des Expansionsfaktors im Vergleich zum Vergleichsbeispiel (%)** | - | 9% | 21% |
| **Masseverlust** | 73% | 71% | 69% |
| **$CO_2$-Bilanz** | ca. 2,79 kg $CO_2$ eq./kg | ca. 2,53 kg $CO_2$ eq./kg (-9 %) | ca. 2,28 kg $CO_2$ eq./kg (-17 %) |

Die Ergebnisse in Tabelle 2 zeigen, dass mit steigendem Anteil an recycelten Kautschukprodukt eine stärkere Intumeszenz resultiert, was sich in zunehmenden Expansionsfaktoren äußert. Außerdem zeigen die erfindungsgemäßen Schäume mit zunehmendem Gehalt an recycelten Kautschukprodukt einen geringer werdenden Masseverlust nach Hitzebehandlung, d.h. eine verstärkte Aschebildung. Beides ist förderlich für die Brandschutzeigenschaften der erfindungsgemäßen Beispiele, welche eine niedrigere $CO_2$-Bilanz aufweisen als das Vergleichsbeispiel.

**Patentansprüche**

1. Polyol-basierte Basiszusammensetzung zur Herstellung eines geschäumten Formkörpers für Brandschutzanwendungen umfassend

   - mindestens ein gegenüber Isocyanatgruppen reaktionsfähiges Polyol,
   - mindestens ein dämmschichtbildendes Brandschutzadditiv, sowie
   - ein Treibmittel,

   **dadurch gekennzeichnet, dass** die Zusammensetzung mindestens ein recyceltes Kautschukprodukt umfasst.

2. Polyol-basierte Basiszusammensetzung gemäß Anspruch 1, **dadurch gekennzeichnet, dass** das Treibmittel ein oder mehrere Verbindungen umfasst, die in der Lage sind, nach Aktivierung durch Reaktion $CO_2$ freizusetzen.

3. Polyol-basierte Basiszusammensetzung gemäß Anspruch 1 oder 2, **dadurch gekennzeichnet, dass** das gegenüber Isocyanatgruppen reaktionsfähige Polyol ausgewählt wird aus der Gruppe Polyetherpolyole.

4. Schaumzusammensetzung umfassend eine Polyol-basierte Basiszusammensetzung gemäß einem der Ansprüche 1 bis 3 und mindestens ein Polyisocyanat.

5. Polyol-basierte Basiszusammensetzung gemäß einem der Ansprüche 1 bis 3 oder Schaumzusammensetzung gemäß Anspruch 4, **dadurch gekennzeichnet, dass** das recycelte Kautschukprodukt durch Schreddern, Granulieren und / oder Mahlen eines industriell gefertigten (Abfall-)Produkt hergestellt wurde.

6. Polyol-basierte Basiszusammensetzung gemäß einem der Ansprüche 1 bis 3 oder 5 oder Schaumzusammensetzung gemäß Anspruch 5 oder 6, **dadurch gekennzeichnet, dass** das recycelte Kautschukprodukt aus (Alt)Reifen und/oder (Alt)Reifenprodukten hergestellt wurde.

7. Polyol-basierte Basiszusammensetzung gemäß einem der Ansprüche 1 bis 3 oder 5 oder 6 oder Schaumzusammensetzung gemäß einem der Ansprüche 4 bis 6, **dadurch gekennzeichnet, dass** das recycelte Kautschukprodukt einen Partikelgröße von 0,1 bis 3 mm aufweist.

8. Polyol-basierte Basiszusammensetzung gemäß einem der Ansprüche 1 bis 3 oder 5 bis 7 oder Schaumzusammensetzung gemäß einem der Ansprüche 4 bis 7, **dadurch gekennzeichnet, dass** das Treibmittel Wasser umfasst.

9. Schaumzusammensetzung gemäß einem der Ansprüche 4 bis 8, **dadurch gekennzeichnet, dass** der gewichtsprozentuale Anteil des recycelten Kautschukprodukts 1 bis 30 Gew.-% bezogen auf das Gesamtgewicht der Schaumzusammensetzung beträgt.

10. Verfahren zur Herstellung eines geschäumten Formkörpers umfassend

   a. das Vermischen der Komponenten der Schaumzusammensetzung gemäß einem der Ansprüche 4 bis 9,
   b. Einbringen der Schaumzusammensetzung in ein formgebendes Element und
   c. Nach der Reaktion der Komponenten der Schaumzusammensetzung Entfernen des formgebenden geschäumten Formkörpers aus dem formgebenden Element.

11. Geschäumter Formkörper hergestellt aus einer Schaumzusammensetzung gemäß einem der Ansprüche 4 bis 9.

12. Geschäumter Formkörper gemäß Anspruch 11 **dadurch gekennzeichnet, dass** der Formkörper einen Polyurethananteil von weniger als 85 Gew.-% aufweist.

13. Verwendung mindestens eines recycelten Kautschukproduktes in einem geschäumten Formkörper auf Basis von Polyurethan zur Verbesserung der $CO_2$-Bilanz des geschäumten Formkörpers.

14. Verwendung gemäß Anspruch 13, **dadurch gekennzeichnet, dass** der geschäumte Formkörper eine verbesserte Aschekrustenbildung bei Hitzewirkung aufweist.

15. Verwendung gemäß Anspruch 13 oder 14, **dadurch gekennzeichnet, dass** der geschäumte Formkörper ein verbessertes Expansionsverhalten bei Hitzeeinwirkung zeigt.

**Europäisches Patentamt**
**European Patent Office**
**Office européen des brevets**

# EUROPÄISCHER RECHERCHENBERICHT

**Nummer der Anmeldung**

**EP 23 15 9756**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 696 206 A1 (HILTI AG [LI]) 19. August 2020 (2020-08-19) | 1-8,10, 11 | INV. C08G18/48 |
| Y | * Absätze [0001], [0007], [0010], [0064] – [0065]; Ansprüche; Beispiele; Tabelle 1 * | 1-15 | C08G18/76 C08L71/03 C08L75/08 C08G18/50 |
| | ----- | | |
| Y | US 10 703 909 B1 (NYSTROM KENNETH [US]) 7. Juli 2020 (2020-07-07) * Spalte 1, Zeilen 6-8 * * Spalte 2, Zeile 51 – Spalte 3, Zeile 27 * * Spalte 9, Zeilen 39-53; Ansprüche; Abbildung 2; Beispiele IV, VI * | 1-15 | |
| | ----- | | |
| X | CN 111 500 054 A (JIANGSU ATE POLYMERS CO LTD) 7. August 2020 (2020-08-07) | 13 | |
| Y | * Absätze [0001], [0004] – [0005]; Ansprüche; Beispiel 1; Tabelle 2 * | 1-15 | |
| | ----- | | |
| X | CN 105 542 103 A (UNIV SOUTHWEST SCIENCE & TECH) 4. Mai 2016 (2016-05-04) | 13 | RECHERCHIERTE SACHGEBIETE (IPC) |
| Y | * Absätze [0001], [0004] – [0010]; Ansprüche; Beispiel 1 * | 1-15 | C09J C08G C08L |
| | ----- | | |

Der vorliegende Recherchenbericht wurde für alle Patentansprüche erstellt

| Recherchenort | Abschlußdatum der Recherche | Prüfer |
|---|---|---|
| München | 7. August 2023 | Eigner, Markus |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 9756

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-08-2023

| Im Recherchenbericht angeführtes Patentdokument | Datum der Veröffentlichung | Mitglied(er) der Patentfamilie | Datum der Veröffentlichung |
|---|---|---|---|
| EP 3696206 A1 | 19-08-2020 | CA 3123353 A1 | 20-08-2020 |
| | | EP 3696206 A1 | 19-08-2020 |
| | | EP 3924399 A1 | 22-12-2021 |
| | | US 2022106434 A1 | 07-04-2022 |
| | | WO 2020164892 A1 | 20-08-2020 |
| US 10703909 B1 | 07-07-2020 | US 10703909 B1 | 07-07-2020 |
| | | US 2020362172 A1 | 19-11-2020 |
| CN 111500054 A | 07-08-2020 | KEINE | |
| CN 105542103 A | 04-05-2016 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2202256 A1
- GB 2007689 A1
- EP 139401 A1
- US 3969291 A1
- US 4442157 A
- US 3562197 A
- GB 755551 A
- EP 138546 A1

**In der Beschreibung aufgeführte Nicht-Patentliteratur**

- **S. V LEVCHIK ; E. D WEIL.** *Polym. Int.,* 2004, vol. 53, 1901-1929